# EUROPEAN PATENT APPLICATION

(11) **EP 2 154 062 A2**
(43) Date of publication of application: **17.02.2010**
(21) Application number: 09251988.3
(22) Date of filing: 13.08.2009
(51) Int. Cl.: B63C 9/04

(54) **Inflatable life-raft**

(30) Priority: 15.08.2008 GB 0814976
(71) Applicant: Besse & Mill Limited, Southampton SO14 5QF (GB)
(72) Inventor: Besse, Richard, Southampton SO14 5Q (GB)
(74) Representative: Davies, Simon Robert

(57) **Abstract**

An inflatable life-raft (10) comprises a plurality of inflatable sections (50,60,70), a gas supply (80) for inflating the life-raft, and a valve arrangement (110) linked to the gas supply. The valve arrangement is sensitive to the orientation of the life-raft for directing gas from the gas supply (80) into at least a first inflatable section in a first orientation and into at least a second inflatable section in a second orientation. Such an arrangement can help to ensure that the life-raft inflates properly irrespective of the orientation in which it is launched.

## Description

### Field of the Invention

The present invention relates to inflatable life-rafts, for use for example on boats and ships.

### Background of the Invention

Boats and ships as well as some other vessels such as certain aeroplanes carry life-rafts. A life-raft is used if the crew and/or passengers have to vacate or abandon the vessel on water. It is very common to have inflatable life-rafts, since these are compact and easy to store when not in use. Inflatable life-rafts are available in a wide range of sizes; for example, a relatively small life-raft might accommodate four people, while a relatively large life-raft might accommodate up to a hundred people, or perhaps more.

An inflatable life-raft is normally inflated after it is launched onto the sea (or other body of water). The inflation is generally achieved by activating a valve that releases gas from a gas cylinder within the life-raft. In many vessels, the life-raft is arranged to inflate automatically on launch. For example, as the life-raft is dropped from the vessel, this pulls on a line which in turn activates the valve to inflate the life-raft.

It is a common requirement for inflatable life-rafts that they should be operable irrespective of which way up they are launched (the right way up or upside down). One common approach for achieving this requirement is to make the life-raft symmetrical top and bottom, so that it doesn't matter which way up the life-raft is launched. Another approach is to provide a self-righting design, whereby the mass distribution and shape of the inflated life-raft combine to ensure that the life-raft floats the right way up, even if it is initially launched upside down. A further approach is to utilise the buoyancy of the life-raft after inflation to properly configure itself. For example, a life-boat may have a base or deck portion for accommodating people. This base portion is symmetric, and so can float either way up. The life-raft also has a central column, perpendicular to the base portion, which passes through the centre of the base portion. Although the column is initially inflated so that the column is half-below and half-above the base portion of the life-raft, i.e. a symmetric configuration, the buoyancy of the column in the water lifts the column until it extends upwards from (and no longer protrudes through) the base of the life-raft. In this (asymmetric) position, the column is used to support a canopy to provide shelter for the occupants of the life-raft.

Neither of the above approaches is entirely satisfactory. For example, they tend to increase the amount of gas that is needed to inflate the life-raft as well as the amount of material used in the life-raft. In addition, they all impose constraints on the overall design and operation of the life-raft.

### Summary of the Invention

One embodiment of the invention provides an inflatable life-raft comprising a plurality of inflatable sections, a gas supply for inflating the life-raft, and a valve arrangement sensitive to the orientation of the life-raft for directing gas from the gas supply into at least a first inflatable section in a first orientation and into at least a second inflatable section in a second orientation.

This orientation-sensitive inflation of the life-raft provides increased flexibility in the design of the life-raft, and also helps to conserve resources such as the gas used for inflating the life-raft. This in turn helps to reduce the size, weight and cost of the life-raft.

In general, the valve arrangement includes a trigger valve to retain gas in the gas supply until inflation of the life-raft is activated. The trigger valve is usually activated by pulling on a line when the life-raft is launched.

The valve arrangement may be made sensitive to the orientation of the life-raft by the use of gravity. For example, the valve arrangement may include an actuator that is able to move under gravity between a first position in the first orientation and a second position in the second orientation. The position of the actuator can then be used to control the flow of gas through the valve in an orientation-sensitive manner.

In one embodiment, the valve arrangement includes a bi-directional outlet for directing gas from the gas supply into the first inflatable section or into the second inflatable section. In particular, the bi-directional valve directs gas into the first inflatable section in response to detecting the first orientation of the life-raft and directs gas into the second inflatable section in response to detecting the second orientation of the life-raft. In this embodiment, in the first orientation, the actuator itself may be used to provide a gas flow path from the gas supply into the first inflatable section, while in the second orientation, the actuator is used to provide a gas flow path from the gas supply into the second inflatable section.

In another embodiment, the valve arrangement includes at least first and second orientation-sensitive valves. The first orientation valve directs gas from the gas supply into the first inflatable section in response to detecting the first orientation of the life-raft. The second orientation valve directs gas from the gas supply into the second inflatable section in response to detecting the second orientation of the life-raft. The first orientation valve is closed if the life-raft is in the second orientation, while the second orientation valve is closed if the life-raft is in the first orientation.

Such an embodiment may include an actuator in the first orientation valve that is able to move under gravity between a first open position in the first orientation and a second closed position in the second orientation, and an actuator in the second orientation valve that is able to move under gravity between a first closed position in the first orientation and a second open position in the second orientation. Each orientation valve may further include a shield to help prevent movement of the actuator from the open position as gas flows through the valve - i.e. to prevent the gas flow lifting the actuator against the pull of gravity from the open position towards the closed position.

In one embodiment, the life-raft includes an inflatable body portion, for inflation irrespective of the orientation of the life-raft, and first and second inflatable sections, for selective inflation according to the orientation of the life-raft. The valve arrangement is located at least in part between (i) the body portion and (ii) the first and second inflatable sections for controlling the flow of gas from the former to the latter. In this configuration, the gas supply can first inflate the body portion, and then gas is selectively directed to the first or second inflatable section by the valve arrangement according to the orientation of the life-raft.

In one embodiment, the gas supply comprises a first gas supply for inflating a first inflatable section, and a second gas supply for inflating a second inflatable section. The valve arrangement detects the orientation of the life-raft and operates the first gas supply to direct gas into the first inflatable section in the first orientation and operates the second gas supply to direct gas into the second inflatable section in the second orientation. Consequently, either the first inflatable section or the second inflatable section is inflated, according to the orientation of the life-raft.

Other embodiments of the invention provide a valve arrangement for use in a life-raft such as described above, as well as an inflation device for a life-raft, where the inflation device comprises such a valve arrangement and a gas supply.

### Brief Description of the Drawings

Various embodiments of the invention will now be described in detail by way of example only with reference to the following drawings:
Figure 1A is a schematic diagram of a life-raft in accordance with one embodiment of the invention.
Figure 1B is a schematic diagram of a life-raft in accordance with another embodiment of the invention.
Figures 2A and 2B are schematic diagrams of a valve for use in the life-raft of Figure 1A in accordance with one embodiment of the invention.
Figure 3 is a schematic diagram of a valve for use in the life-raft of Figure 1A or 1B in accordance with one embodiment of the invention; in particular Figure 3A shows the valve in one configuration, while Figure 3B shows the valve in the opposite configuration.
Figure 4 is a schematic diagram of a valve for use in the life-raft of Figure 1A or 1B in accordance with another embodiment of the invention; in particular Figure 4A shows the valve in one configuration, while Figure 4B shows the valve in the opposite configuration.
Figure 5 is a schematic diagram of a valve for use in the life-raft of Figure 1A and having the valve configuration of Figure 2B in accordance with one embodiment of the invention.
Figures 6A-6D illustrate various logical arrangements and operation of a life-raft in accordance with four different embodiments of the invention.

### Detailed Description

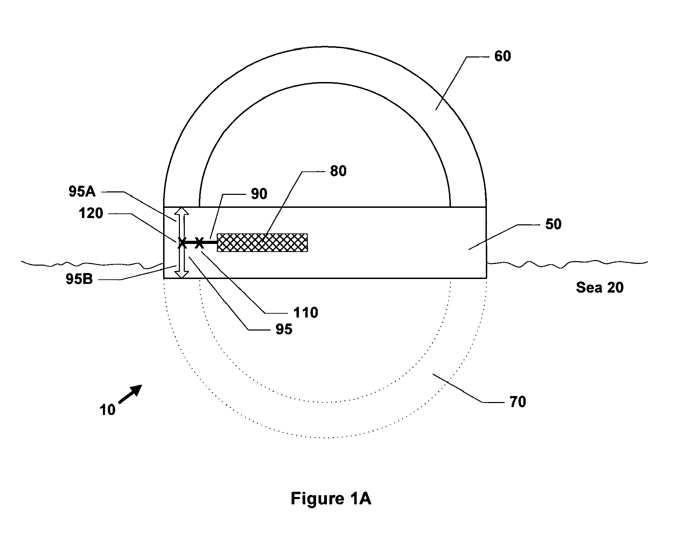

Figure 1A is a schematic diagram of a life-raft 10 in accordance with one embodiment of the invention. The life-raft 10 is shown floating on sea 20 or other body of water. The life-raft includes a base portion 50 and two cover supports 60, 70 on opposite sides of the base portion 50. The base portion 50 can be used either way up in water - i.e. with support 60 on top and support 70 below, or vice versa.

As will be described in more detail below, life-raft 10 is configured so that depending on the orientation of base portion 50 on water 20, only the cover support that is above the base portion inflates. Thus for the orientation shown in Figure 1A, cover support 60 has inflated, which can then be used to provide and/or support a shelter for the occupants of life-raft 10. In the orientation shown in Figure 1A, cover support 70 is not inflated, and is therefore depicted with dotted lines in Figure 1A. It will be appreciated that since cover support 70 is not inflated, in general it will not extend as shown in Figure 1A, but rather will tend to remain close to base portion 50 in its uninflated configuration.

On the other hand, if the orientation of life-raft 10 in water 20 was reversed when the life-raft 10 was inflated, then cover support 60 would be below base portion 50, and cover support 70 would be above base portion 50. In this case, cover support 70 would inflate to provide shelter for the occupants of the life-raft 10, while cover support 60 would remain uninflated.

Life-raft 10 includes gas cylinder 80 for inflating the life-raft. Because life-raft 10 only inflates one of the cover supports 60, 70, but not both, the amount of gas to be contained in gas cylinder 80 is correspondingly reduced, thereby helping to reduce the cost and space requirements for life-raft 10.

The life-raft 10 further includes a valve 110 for releasing gas from gas cylinder 80. Valve 110 is generally activated by pulling on a trigger-line when the life-raft is launched. The flow-rate of gas from gas cylinder 80 when valve 110 is activated is rather high, since the life-raft has to be inflated quickly - usually in about 20 seconds at a typical ambient temperature, or 10 seconds at an elevated temperature.

Valve 110 normally relies on the pressure difference between the gas in gas cylinder 80 (which is generally held under pressure) and the pressure inside the (not yet inflated) life-raft 10 to drive the flow of gas through the valve 110. After the pressure has equalised between the gas cylinder 80 and the (now inflated) life-raft 10, valve 110 may shut off automatically to retain gas in the life-raft - i.e. to prevent any leakage back into the gas cylinder 80.

It will be appreciated that many existing life-rafts include a valve with similar functionality to that described above for valve 110. Accordingly, the skilled person is already familiar with various possibilities for implementing valve 110, and so the detailed construction of valve 110 will not be described further herein.

Life-raft 10 further includes directional valve 120. This valve 120 directs gas from gas cylinder 80 into either cover support 60, as indicated by arrow 95A, or into cover support 70, as indicated by arrow 95B (but not into both). In particular, the operation of directional valve 120 is dependent on the orientation of life-raft 10, and hence the orientation of valve 120. Thus if the life-raft 10 has the orientation shown in Figure 1A, then valve 120 directs gas from gas cylinder 80 to inflate cover support 60 as indicated by arrow 95A. Alternatively, if the life-raft 10 has an orientation opposite to that shown in Figure 1A, i.e. upside down, then valve 120 directs gas from gas cylinder 80 to inflate cover support 70 as indicated by arrow 95B. Thus directional valve 120 ensures that the inflation of life-raft 10 is sensitive to the current orientation of the life-raft in water 20.

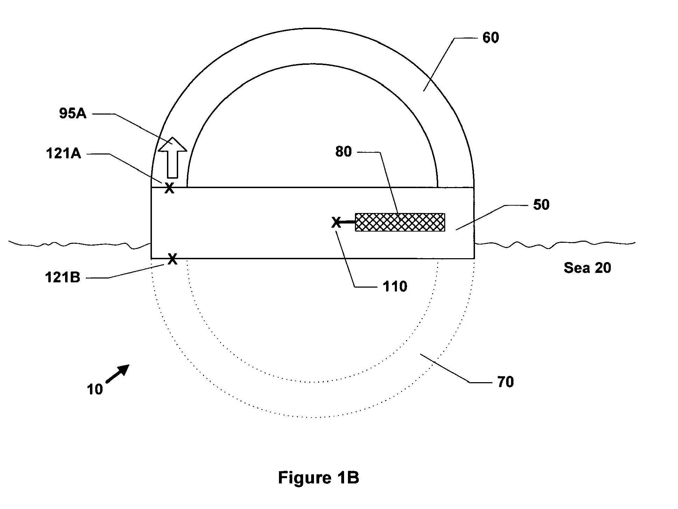

It will be appreciated that gas cylinder 80 is also generally used to inflate base portion 50 through valve 110. Since the inflation of base portion 50 is not sensitive to orientation, valve 110 may be provide with a separate gas path (not shown in Figure 1A) for inflating base portion 50 that does not go through directional valve 120. Alternatively, all the gas flow from valve 110 may pass through directional valve 120. In this case, directional valve 120 may have an additional outlet (not shown in Figure 1) that is operational irrespective of the orientation of the life-raft 10. This additional (non-directional) outlet can then be used to inflate base portion 50. A further possibility is that a portion of both gas flow 95A and also gas flow 95B is used to inflate base portion 50. Again, this would ensure inflation of base portion 50 irrespective of the orientation of the life-raft 10.

Depending on the implementation of the gas supply into base portion 50, a one-way valve (not shown in Figure 1A) may be used to maintain the orientation-sensitive inflation of the life-raft. Such a valve would serve to prevent gas supplied from flow 95A into base portion 50 then escaping out of base portion 50 into cover support 70 (which is not to be inflated in favour of cover support 60). Likewise, a one-way valve would also prevent gas from gas flow 95B from passing into base portion 50 and then escaping out of base portion 50 into cover support 60.

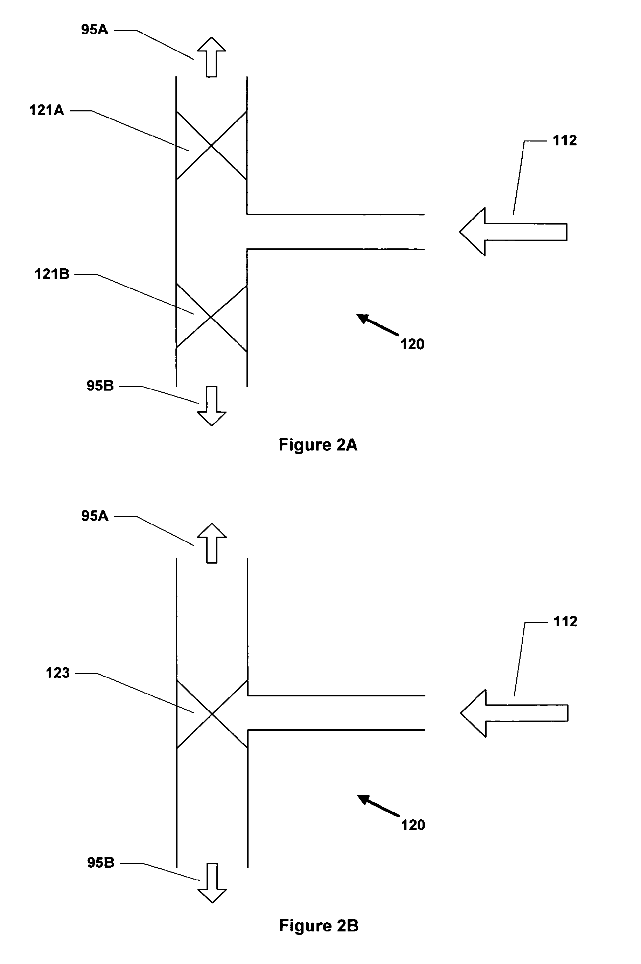

Figures 2A and 2B are schematic diagrams of a directional valve 120 for use in the life-raft 10 of Figure 1A in accordance with two different embodiments of the invention. In the embodiments of both Figures 2A and 2B, gas from the gas cylinder enters directional valve 120 as indicated by arrow 112 (generally via release valve 110). In both embodiments, the valve 120 includes a T-junction, where the incoming gas can be directed in two different directions, corresponding to arrows 95A and 95B. (It will be appreciated that any other appropriate geometry may be used, and also there may be more than one outlet from valve 120 in each of the directions 95A, 95B.

In the embodiment of Figure 2A, directional valve 120 has two separate valve components, 121A and 121B. The state (open/shut) of these two valve components depends on the orientation of the life-raft 10. The first valve component 121A is used to control gas flow 95A and opens when cover support 60 is uppermost, corresponding to the configuration shown in Figure 1A and Figure 2A. In this configuration, the second valve component 121B, which is used to control gas flow 95B, remains closed. This prevents gas from reaching the other cover support 70, which therefore remains uninflated in this configuration.

On the other hand, if the life-raft 10 has the opposite orientation, with cover support 70 this time uppermost, then valve 121B opens and valve 121A remains closed. This directs gas into the cover support 70 for inflation, while cover support 60 remains uninflated.

In the embodiment of Figure 2A, there is no direct linkage or connection in operation between the two valve components 121A and 121B. In other words, opening valve component 121A does not, in itself, close valve component 121B (and vice versa). Rather, the mutual exclusion configuration, whereby only one of valve components 121A, 121B is open for inflation at a given orientation, follows from the opposite (upside-down) configuration of valve component 121A with respect to valve component 121B.

Note that valves 121A and 121B are both one-way valves (in addition to being directional). Therefore, if a valve 121 is the right way up, as per valve 121A shown in Figure 2A, then gas is able to pass through the valve in the relevant permitted direction, such as indicated by arrow 95A, but not in the reverse direction. In contrast, if a valve 121 is the wrong way up, as per valve 121B shown in Figure 2A, then gas is not able to pass through the valve in either direction.

The embodiment of Figure 2B has only a single valve component 123. This component is designed to operate so that opening gas flow 95A necessarily and directly closes gas flow 95B. Conversely, opening gas flow 95B through valve component 123 necessarily and directly closes gas flow 95A. In other words, the mechanical structure of valve component 123 automatically prevents gas flows 95A and 95B from occurring together simultaneously.

In addition, valve component 123 can be designed so that gas flow 112 helps to drive valve 123 into one open position or another. In other words, once gas flow 112 has been started by opening release valve 110, valve 123 is driven to an open position to allow gas to flow through and out of the most appropriate outlet.

Figure 1B illustrates an alternative embodiment of the invention. In this embodiment, gas cylinder 80 is operated via release valve 110 to inflate base portion 50, which provides the main buoyancy support for life-raft 10. The base portion 50 is linked to cover support 60 by directional valve 121A and is linked to cover support 70 by direction valve 121B. In the configuration shown in Figure 1B, with cover support 60 located above base portion 50, gas can flow from base portion 50 into cover support 60 through valve 121A in the direction indicated by arrow 95A., since valve 121A is the right way up. In contrast, valve 121B is shut, since it is the wrong way up. This isolates cover support 70 from base portion 50, thereby preventing cover support 70 from inflating in the configuration of Figure 1B.

The arrangement of Figure 1B helps to ensure that the base portion 50 inflates before cover support 60. In addition, the one-way nature of valve 121A prevents gas that has got into cover support 60 from returning back into base portion 50.

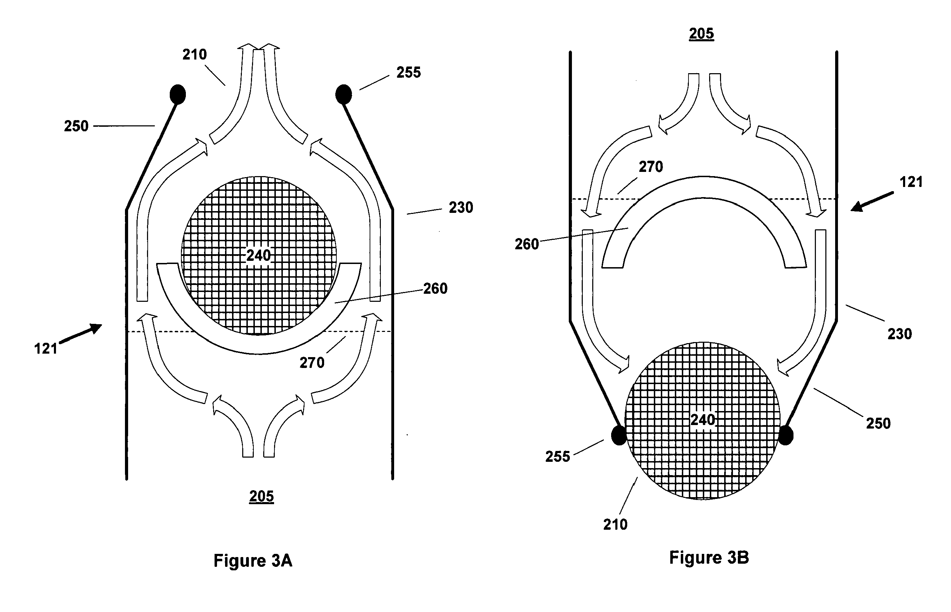

Figures 3A and 3B illustrate a valve 121 that may be used as valve component 121A (and/or as valve component 121B) from Figure 2A in accordance with one embodiment of the invention. Valve 121 is directional, in that it opens or closes depending on the orientation (up/down) of the valve. Figure 3A illustrates valve 121 in the open state. This would correspond to the state of valve component 121A in Figure 2A, permitting gas flow 95A. Figure 3B illustrates valve 121 in the closed state. This would correspond to the state of valve component 121B in Figure 2A, preventing gas flow 95B.

The valve 121 comprises a body which is hollow inside to define a tube 230. The outer wall of the tube 230 is impervious to gas flow, so that gas entering the tube at one end can only exit the tube at the opposite end of the tube. In the embodiment of Figures 3A and 3B, tube 230 has a circular cross-section (thereby forming a cylindrical tube). In other embodiments, tube 230 may have a different cross-sectional shape, such as a square, rectangle, hexagon, or any other suitable shape.

Valve 121 is connected so that gas for inflating the life-raft (from gas cylinder 80) arrives at the inlet end 205 of the tube. This gas then tries to pass through the tube and exit the tube into the inflatable section(s) of the life-raft 10 through outlet end 210. If the valve is in the open state, as shown in Figure 3A, the gas is able to pass through the outlet end 210. However, if the valve is in the closed state, as shown in Figure 3B, outlet end 210 is blocked, and hence gas cannot pass through valve 121.

As can be seen in Figures 3A and 3B, the outlet end 210 of valve 121 has a narrowed or tapered portion 250 to reduce the width of the tube. The rim of the tube here may be provided with a ring 255 of rubber or some other suitably resilient material to provide a good seal.

The valve 121 further includes a cradle 260. The cradle is supported in body 230 by a mesh or spokes 270 which join the outside wall 230 of the valve to cradle 260. The mesh 270 or other suitable support for the cradle 260 is permeable to gas flow through the tube of the valve 121, whereas the cradle 260 itself is generally impermeable to such gas flow.

The valve 121 also includes ball bearing 240, which may be made of metal, plastic, or any other suitable material. Although the ball bearing in the moving part in the embodiment of Figures 3A and 3B is spherical, other embodiments may use a different shaped device for performing this function (and having regard to the cross-sectional shape of tube 230), for example, a cube, a cone, a cylinder, a disk, and so on).

The ball bearing 240 is located in the tube of the valve, and is confined to the region between the cradle 260 and the relatively narrow outlet 210 of the valve 121. In particular, the ball bearing is too large to pass through outlet 210 of the valve, while the cradle 260 prevents the ball bearing from escaping from the opposite end of the tube.

The ball bearing 240 is able to move about in valve 121 in the region between the cradle 260 and outlet end 210 under the influence of gravity. In the orientation of Figure 3A, with the outlet 210 above the inlet 205, the ball bearing 240 sits in cradle 260. In this orientation, gas is able to flow in through end 205, through mesh or spokes 270, around the edges of cradle 260 and ball bearing 240, i.e. in the space between the outside of cradle 260 and ball bearing 240 and the inner wall of tube 230, and finally out through end 210. Note that in this configuration, cradle 260 acts to shield ball bearing 240 from the flow of gas through the valve, thereby avoiding any risk that this flow of gas will lift ball bearing up to the outlet end 210 (which would then tend to close the valve).

In contrast, in the orientation of Figure 3B, with the outlet 210 below the inlet 205, the ball bearing 240 sits in tapered portion 250. In this orientation, gas is able to flow in through end 205, through mesh or spokes 270, and around the edges of cradle 260. However, the gas is unable to exit through the narrow end 210 of valve 121, since this exit is blocked by ball bearing 240. Indeed, as the pressure of the trapped gas rises in valve 121, ball bearing 240 is pushed harder against seal 255 of end 210. This tightens the seal of valve 121 to prevent gas escaping out of narrow end 210.

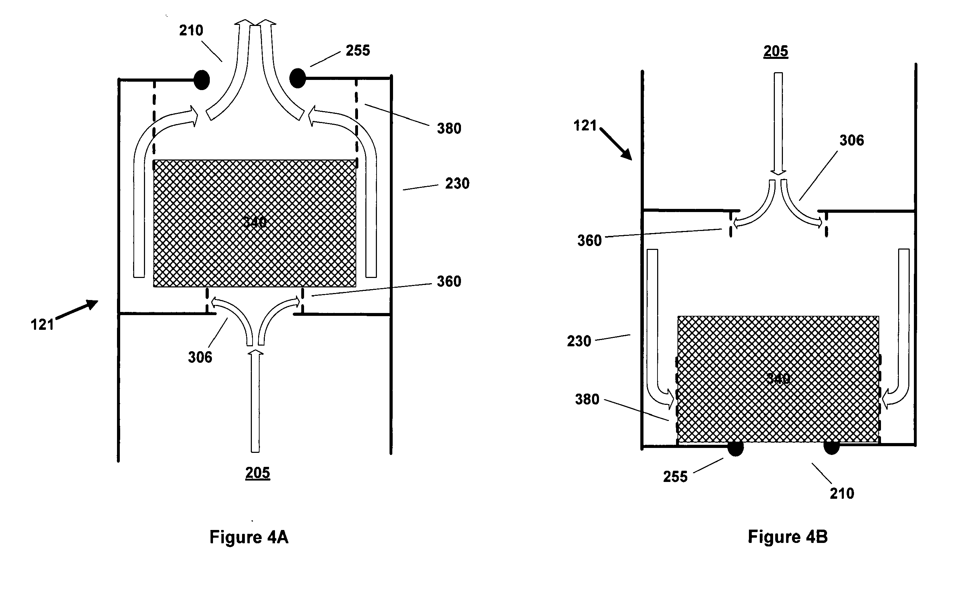

Figures 4A and 4B illustrate another possible arrangement for valve 121. The valve again comprises a tube 230, with an inlet 306 and an outlet 210. A seal 255 (e.g. of rubber) is provided around outlet hole 210. The valve of Figures 4A and 4B is also provided with slug 340 as a moving part. The slug is constrained to slide up and down tube 230 by internal wall 380 that extends parallel to the length of the tube. Internal wall may generally have a similar cross-section to tube 230, and is provided with holes, gaps or similar, to allow gas to flow through.

One end of the range of movement of slug 340 within wall 380 is determined by cradle 360, which supports slug 340 above inlet 306. Cradle 360 is also provided with holes, gaps or similar, to allow gas to flow through.

When outlet 210 is above inlet 306 (as shown in Figure 4A), the slug rests on cradle 360. In this configuration, there is a gas flow path through valve 121 going through inlet 306, cradle 360 and wall 380, before exiting through outlet 210. In contrast, when the outlet 210 is below inlet 306 (as shown in Figure 4B), the slug 340 rests on the end of tube 230 that accommodates outlet 210. In this position (as shown in Figure 4B), slug 340 pushes against seal 255 to close the valve, thereby prevent the flow of air through the valve.

Note that valve 121 may be provided with additional features (not shown in Figures 3 or 4) to ensure one-way operation, in other words, to stop air flowing into the valve through outlet 210. This one-way mechanism may be placed in series with the valve mechanism shown in Figures 3 and 4. (The skilled person will be aware of various potential one-way valve mechanisms).

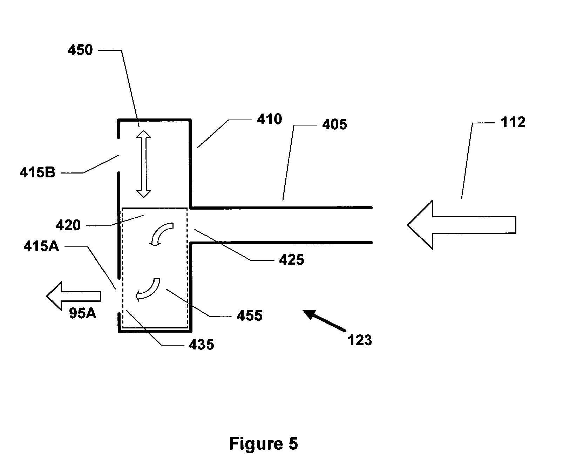

Figure 5 is a schematic diagram of a directional valve 123 for use in the life-raft of Figure 1A and having the valve configuration of Figure 2B in accordance with one embodiment of the invention. Valve 123 receives gas as indicated by arrow 112, for example from a gas cylinder 80 via a trigger valve 110. The valve 123 has two outlets 415A, 415B. The valve is operable to allow gas to pass through the lower of the two outlets. Thus in the configuration shown in Figure 5, outlet 415A is below outlet 415B. This produces an output gas flow as indicated by arrow 95A. In contrast, there is no gas flow from outlet 415B. Conversely, if outlet 415B were below outlet 415A, then the flow through outlet 415A would be shut off, and the gas would flow instead through outlet 415B.

Note that if valve 123 of Figure 5 were included in the embodiment of Figure 1A, each outlet 415 would be connected to the opposite cover support. In other words, outlet 415A would connect to cover support 60, so that outlet 415A would inflate cover support 60 for the orientation shown in Figures 1A and 5. Likewise, outlet 415B would connect to cover support 70 to inflate cover support 70 in the reverse orientation.

Valve 123 is based on a hollow T-shaped configuration, with gas input 112 into the base or inlet tube 405 of the T. The arms of the T form a hollow sleeve 410, with closed ends. Outlets 415A and 415B are adjacent the two respective closed ends. Sleeve 410 incorporates a shuttle member 420 which is free to slide along the sleeve under gravity, as indicated by arrow 455. In other words, shuttle member 420 sits at either end of the sleeve 410, depending on the orientation of valve 123 - i.e. depending on which end of sleeve 410 is currently lower than the other end.

The side 425 of shuttle member 420 that is adjacent the inlet tube 405 is permeable or open to accept gas input, irrespective the end of the sleeve in which the shuttle member 420 is currently located. Thus side 425 might be open or meshed or have any other suitable arrangement to permit the through-flow of gas. Likewise, side 435 of shuttle member 420 that faces the sleeve outlets 415 is also open to permit gas flow from the shuttle member 420 out through the adjacent opening.

The interior of the shuttle member 420 is open or hollow to permit flow of gas through the shuttle member 420, as indicated by arrows 455. However, the shuttle member 420 has closed ends to prevent gas flow from escaping the shuttle member except through the adjacent opening. In other words, in the configuration of Figure 5, the walls 425 and 435 permit gas to flow from inlet tube 405 out through bottom outlet 415A, but prevent any gas from inlet tube 405 from reaching and escaping through top outlet 415B.

It will be appreciated that Figures 3, 4 and 5 represent just three schematic implementations of a directional valve 120 and the skilled person will be aware of many other possible implementations. In many cases, the orientation sensitivity is based on gravity, as for the embodiments of Figures 3, 4 and 5. However, other mechanisms are also possible, for example based on magnetic field, in particular declination, although this varies with latitude, or based on a man-made facility, such as a global (satellite) navigation system.

Even within a given physical basis such as gravity, there are many different ways to detect or sense orientation. Thus the implementations of Figures 3, 4 and 5 are purely mechanical, based on a falling component or actuator to control the valve directionality. Other mechanisms might involve a liquid actuator, such as a mercury tilt switch. In this case the mercury tilt switch might be used to control an electric circuit, which in turn would enforce the directionality of the valve (rather than having the actuator itself directly controlling the flow of gas through the valve, as for the implementations of Figures 3, 4 and 5). Furthermore, instead of using the position of the actuator, such as mercury liquid, to directly open or close a circuit, another implementation might use a piezo-electric sensor to determine the position of the actuator, and this could then be used to control the valve operation. Note that one benefit of a purely mechanical implementation, such as shown in Figures 3, 4 and 5, is that it does not involve the use of electricity in a potentially wet (marine) environment. This can assist with simplicity, reliability, and robustness.

In the embodiment of Figure 1A, the orientation-sensitive inflation is employed in conjunction with a symmetric (top-bottom) life-raft to inflate only certain sections of the life-raft. However, the use of orientation-sensitive inflation is not limited to symmetric life-rafts. For example, an asymmetric life-raft may have a distinct top and bottom. The life-raft may also include one or more righting sections that if filled early in the inflation act to turn the life-raft from the wrong way up to the right way up. The orientation-sensitive inflation may be used to ensure that the righting sections are only inflated if the life-raft is launched the wrong way up, but not if it is launched the right way up.

Although the embodiment shown in Figures 1A and 1B has just a single gas cylinder 80 with a single directional valve 120, it will be appreciated that other embodiments may have multiple gas cylinders and/or multiple directional valves. Furthermore, while the embodiment shown in Figures 1A and 1B has an up/down sensitivity, it will be appreciated that other valves (or combinations of valves) may provide sensitivity to a wider set of orientations.

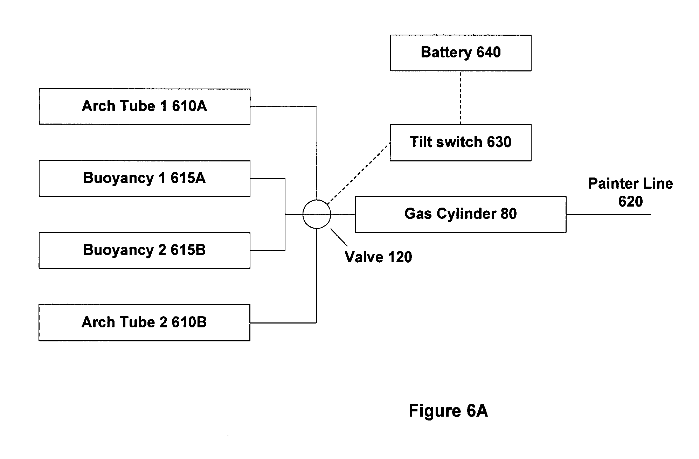

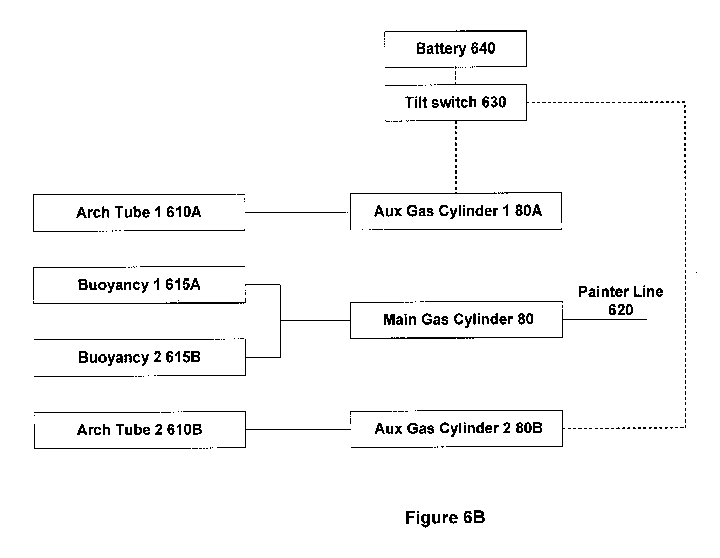

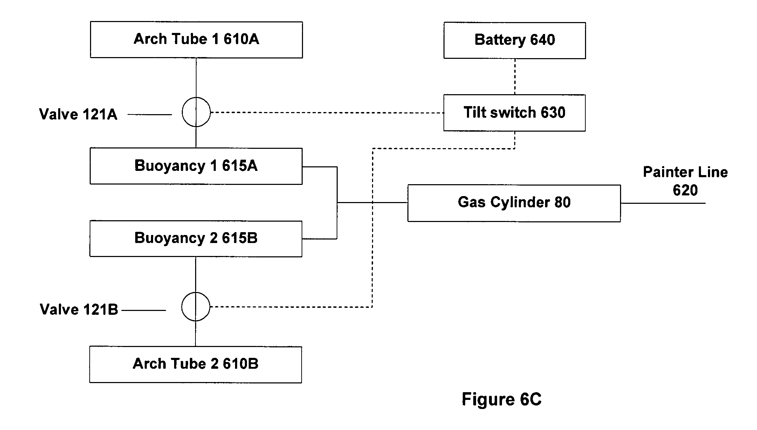

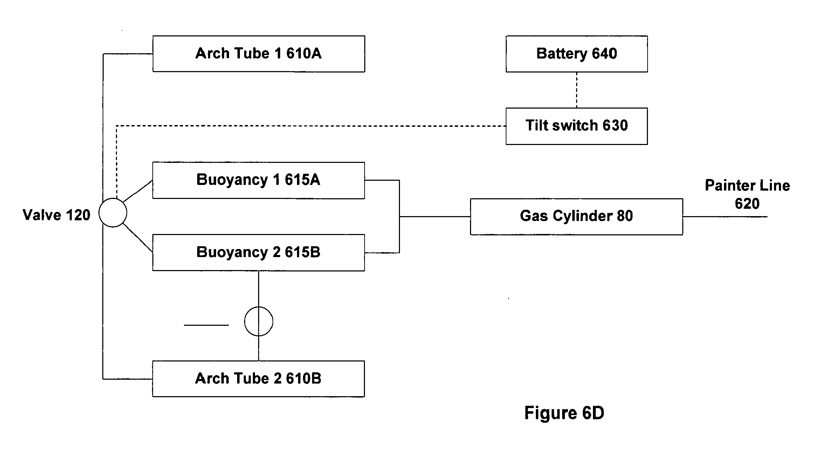

Figure 6 provides schematic illustrations of the logical configuration for a life-raft in accordance with various embodiments of the invention. These embodiments all use a tilt switch for determining orientation, although it will be apparent that many other types of device could also be used for this purpose.

In the embodiment of Figure 6A, the life-raft comprises two main buoyancies, namely buoyancy 1 615A and buoyancy 2 615B. In addition, there are two arch tubes, namely arch tube 1 610A and arch tube 2 610B. The two buoyancies 615A and 615B may form the base portion 50 in the embodiments shown in Figure 1A and Figure 1B. The two arch tubes 610A and 610B may form the two cover portions 60 and 70 in the embodiments shown in Figure 1A and Figure 1B.

The operation of the embodiment of Figure 6A commences when the painter line 620 is pulled to release gas from cylinder 80, which gas then starts to fill buoyancy 1 and buoyancy 2. As this filling progresses towards completion, battery 640 activates the tilt switch 630, which sets valve 120 according to the orientation of the life raft. In particular, valve 120 directs gas from cylinder 80 to arch tube 1 or to arch tube 2 according to the orientation of life-raft, as previously described.

In the embodiment of Figure 6B, there are three gas cylinders, a main gas cylinder 80 which is used for inflating buoyancy 1 and buoyancy 2, a first auxiliary gas cylinder 80A, which is used for inflating arch tube 1, and a second auxiliary gas cylinder 80B, which is used for inflating arch tube 2. The life-raft also includes a battery 640 and a tilt switch 630.

The operation of the embodiment of Figure 6B commences when the painter line 620 is pulled to release gas from main gas cylinder 80, which gas then starts to fill buoyancy 1 and buoyancy 2. As this filling progresses towards completion, battery 640 activates the tilt switch 630. Rather than operating a valve (as for the embodiment of Figure 6A), tilt switch 630 opens either auxiliary cylinder 1, for filling arch tube 1, or alternatively auxiliary cylinder 2, for filling arch tube 2, according to the orientation of the life-raft.

Note that in the embodiment of Figure 6B the components to be selectively inflated (according to the orientation of the life-raft) are provided with separate gas supplies, so that the selective inflation can be accomplished by selective opening of relevant gas supply (rather than appropriate direction of a shared gas supply). In effect therefore, the tilt switch 630 in conjunction with the two release valves on the two separate gas supplies operates as a direction-sensitive valve arrangement.

The embodiment of Figure 6C is generally similar to the embodiment of Figure 6A, except that each arch tube is supplied with gas for inflation from a corresponding buoyancy unit. In particular, arch tube 1 is supplied with gas from buoyancy 1 through valve 121A, while arch tube 2 is supplied with gas from buoyancy 2 through valve 121B. Tilt switch 630 is used to selectively activate either valve 121A or valve 121B according to the orientation of the life-raft.

The operation of the embodiment of Figure 6C commences when the painter line 620 is pulled to release gas from main gas cylinder 80, which gas then starts to fill buoyancy 1 and buoyancy 2. As this filling progresses towards completion, battery 640 activates the tilt switch 630. Tilt switch 630 selectively activates either valve 121A or valve 121B according to the orientation of the life-raft, which then leads to inflation of the corresponding arch tube. Thus tilt switch 630 in conjunction with the two valves 121A, 121B operates as a direction-sensitive valve arrangement.

The embodiment of Figure 6D is generally similar to the embodiment of Figure 6C, except that both arch tubes are supplied with gas for inflation from both buoyancy units through a single valve 120. In operation, tilt switch 630 operates valve 120 to direct gas from the two buoyancy units either to arch tube 1 or to arch tube 2 according to the orientation of the life-raft.

In summary, the above embodiments are provided by way of example only, and the skilled person will be aware of many potential modifications or variations that remain with the scope of the present invention as defined by the appended claims.

## Claims

1. An inflatable life-raft comprising:
a plurality of inflatable sections;
a gas supply for inflating the life-raft; and
a valve arrangement sensitive to the orientation of the life-raft for directing gas from the gas supply into at least a first inflatable section in a first orientation and into at least a second inflatable section in a second orientation.

2. The life-raft of claim 1, wherein the valve arrangement includes a trigger valve to retain gas in the gas supply until inflation of the life-raft is activated.

3. The life-raft of claim 1 or 2, wherein the valve arrangement includes a bi-directional outlet for directing gas from the gas supply into the first inflatable section or into the second inflatable section, wherein the bi-directional valve directs gas into the first inflatable section in response to detecting the first orientation of the life-raft and directs gas into the second inflatable section in response to detecting the second orientation of the life-raft.

4. The life-raft of any preceding claim, wherein the valve arrangement is sensitive to the orientation of the life-raft by virtue of gravity.

5. The life-raft of claim 4, wherein the valve arrangement includes an actuator that is able to move under gravity between a first position in said first orientation and a second position in said second orientation.

6. The life-raft of claim 5, wherein in the first orientation, the actuator provides a gas flow path from the gas supply into the first inflatable section, and wherein in the second orientation, the actuator provides a gas flow path from the gas supply into the second inflatable section.

7. The life-raft of claim 1 or 2, wherein the valve arrangement includes at least first and second orientation sensitive-valves, the first orientation valve directing gas from the gas supply into the first inflatable section in response to detecting the first orientation of the life-raft, and the second orientation valve directing gas from the gas supply into the second inflatable section in response to detecting the second orientation of the life-raft, wherein the first orientation valve is closed if the life-raft is in the second orientation, and the second orientation valve is closed if the life-raft is in the first orientation.

8. The life-raft of claim 7, wherein the valve arrangement is sensitive to the orientation of the life-raft by virtue of gravity.

9. The life-raft of claim 8, wherein the first orientation valve includes an actuator that is able to move under gravity between a first open position in said first orientation and a second closed position in said second orientation, and the second orientation valve includes an actuator that is able to move under gravity between a first closed position in said first orientation and a second open position in said second orientation.

10. The life-raft of claim 9, wherein said actuators are substantially spherical.

11. The life-raft of claim 9 or 10, wherein each orientation valve further includes a shield to help prevent movement of the actuator from the open position as gas flows through the valve.

12. The life-raft of any preceding claim, wherein said life-raft includes an inflatable body portion, for inflation irrespective of the orientation of the life-raft, and first and second inflatable sections, for selective inflation according to the orientation of the life-raft, and wherein said valve arrangement is located between (i) the body portion and (ii) the first and second inflatable sections for controlling the flow of gas from the former to the latter.

13. The life-raft of claim 1, comprising a first gas supply for inflating a first inflatable section, and a second gas supply for inflating a second inflatable section, wherein the valve arrangement operates the first gas supply to direct gas into the first inflatable section in the first orientation and operates the second gas supply to direct gas into the second inflatable section in the second orientation, such that either the first inflatable section or the second inflatable section is inflated, according to the orientation of the life-raft.

14. A valve arrangement for use in the life-raft of any preceding claim.

15. An inflation device for a life-raft, comprising a gas supply and the valve arrangement of claim 14.
